(19) Europäisches Patentamt
European Patent Office
Office européen des brevets

(11) EP 1 770 744 A1

(12) EUROPEAN PATENT APPLICATION
published in accordance with Art. 158(3) EPC

(43) Date of publication:
04.04.2007 Bulletin 2007/14

(51) Int Cl.:
*H01J 9/22* (2006.01)     *H01J 9/227* (2006.01)

(21) Application number: 05755756.3

(22) Date of filing: 29.06.2005

(86) International application number:
PCT/JP2005/011967

(87) International publication number:
WO 2006/003944 (12.01.2006 Gazette 2006/02)

(84) Designated Contracting States:
DE FR GB IT NL

(30) Priority: 02.07.2004 JP 2004196892

(71) Applicant: KABUSHIKI KAISHA TOSHIBA
Tokyo 105-8001 (JP)

(72) Inventors:
• GAMO, Yasunori., c/o IP Division Toshiba Corp.
Tokyo 105-8001 (JP)

• TANAKA, Hajime., c/o IP Division Toshiba Corp.
Tokyo 105-8001 (JP)
• OGURI, Takumi., c/o IP Division Toshiba Corp.
Tokyo 105-8001 (JP)
• ITO, Takeo., c/o IP Division Toshiba Corp.
Tokyo 105-8001 (JP)

(74) Representative: HOFFMANN EITLE
Patent- und Rechtsanwälte
Arabellastrasse 4
81925 München (DE)

(54) MOLDING DEVICE AND MOLDING METHOD

(57) A forming apparatus having a film pull-out mechanism (22) which pulls out, from a winding body of a transfer film in which a predetermined layer is formed on a base film, the transfer film from its end portion, a film transport mechanism (1, 4, 23, 7) which transports the pulled out transfer film to a downstream side, a transfer mechanism (6, 17, 18) which transfers the predetermined layer onto a plate mounted on a movable mounting table (14), by pressing and heating the transfer film, a film take-up mechanism (8) which takes up the transfer film while peeling off the base film from the transfer film, a moving mechanism (10, 11, 12, 13) formed on the same enclosure (BD) as the transfer mechanism, for moving the mounting table, a pressing mechanism (9, 24) formed on the enclosure (BD), for pressing the plate on the mounting table, and a control portion (52) which controls each operation to transfer the predetermined layer onto the plate and press the plate, in response to an operation instruction from an external source. With a single unit of such a forming apparatus, transfer and pressing are automatically performed.

FIG. 1

**Description**

Technical Field

The present invention relates to a forming apparatus that forms a predetermined layer, such as a resin layer or a metal-backed layer, on a plate of a flat-type image display apparatus, such as a field emission display (hereinafter, referred to as an "FED"), for example.

Background Art

Conventionally, a phosphor surface of an image display apparatus, such as a cathode ray tube (CRT) or an FED, widely employs a structure of a metal-back scheme in which a metal film, such as Al, is formed on an inner surface of a phosphor layer (surface on the opposite side of a faceplate).

Purposes of the metal-back scheme are to reflect light, which is emitted from a phosphor layer excited by electrons emitted from an electron source to a metal film (metal-backed layer) side, to more efficiently send light emission energy to the front of a faceplate, and to provide conductivity to a phosphor surface and allow the phosphor surface to also function as an electrode. Here, for an easy metal-backed layer forming method, there is proposed a transfer scheme in which a deposited metal film is formed on a film having a release agent applied thereto and the metal film is transferred onto a phosphor layer using an adhesive (see Jpn. Pat. Appln. KOKAI Publication No. 63-102139, for example).

In such a transfer scheme, after masking is provided to a non-display region of a faceplate peripheral portion by a method such as attaching masking tape, transfer is performed by a hot stamping method in which a transfer film is pressed while being heated. In this hot stamping method, a scheme is often used in which a metal film is formed on a base film, which is cut to a predetermined size, whereby a transfer film is fabricated, and an adhesive is applied to the metal film of the transfer film by a dedicated applying apparatus and further dried.

However, although the aforementioned cited document which refers to a conventional technique shows a method of producing a phosphor surface of a cathode ray tube, there is a problem that when, for example, a predetermined layer such as a resin layer or a metal-backed layer is formed on a plate of a flat-type image display apparatus, it is unclear specifically what forming apparatus is to be used to automatically form the predetermined layer.

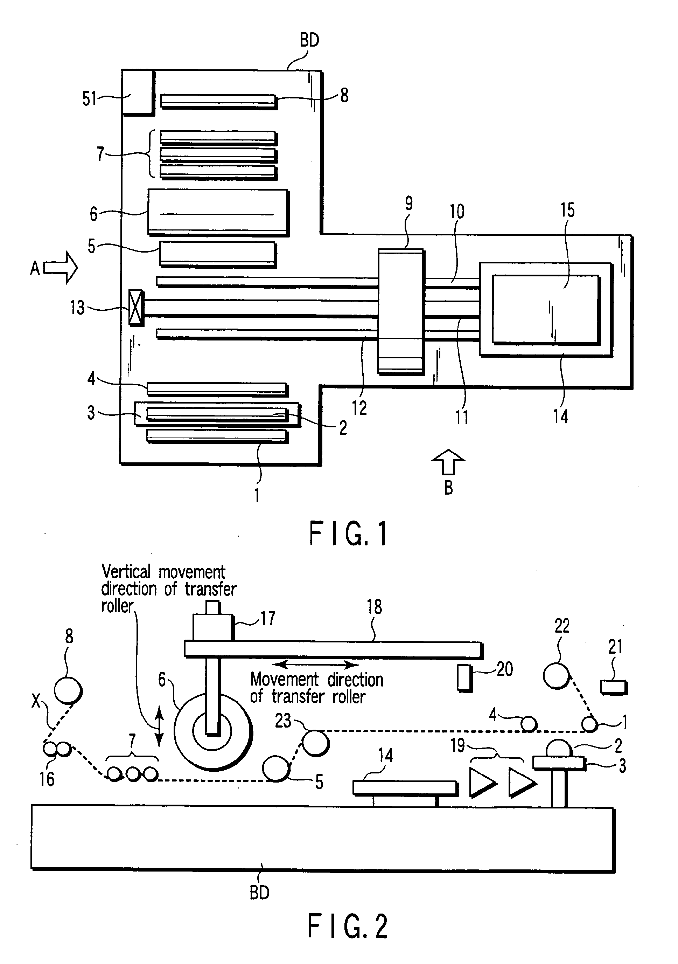

That is, in the conventional apparatus, it is unclear how transfer processing and pressing processing are automatically performed using a producing apparatus, and FIGS. 1 and 2 seem to show that these operation steps are performed by the aid of an operator or show a concept of processing steps.

Hence, in the conventional apparatus, there is a problem that a specific forming apparatus for automatically and surely performing transfer processing and pressing processing without bothering an operator is unclear.

Namely, it is difficult to perform two processes, i.e., transfer processing and pressing processing, at the same time by an autonomous producing apparatus and if these processes are performed using a plurality of apparatuses, including a transfer apparatus and a pressing apparatus, an operation of taking out a plate having been subjected to transfer from a stage and placing the plate onto a substrate stage of the pressing apparatus is required. In this method, depending on how a plate is handled, factors causing scratches or cracks in the plate or a substrate edge chipping defect may be caused; accordingly, the plate may lose its function as an FP product and may become unusable. In addition, if two plate stages are used, an initial operation of adjusting a pressure distribution at each stage arises, creating a significant burden. Hence, there is a problem in the conventional technique that a specific configuration of a forming apparatus for automatically and surely performing a transfer process and a pressing process without bothering an operator is unclear.

Disclosure of Invention

An object of the present invention is to provide a forming apparatus capable of automatically performing efficient forming processing without bothering an operator, by providing a specific configuration for performing a transfer process and a pressing process in the same enclosure.

According to the present invention, there is provided a forming apparatus comprising: a film pull-out mechanism which pulls out, from a winding body of a transfer film in which at least a predetermined layer is formed on a base film, the transfer film from its one end side; a film transport mechanism which transports the transfer film pulled out from its one end side by the film pull-out mechanism, to a downstream side; an applying mechanism which applies an adhesive to a surface of the predetermined layer formed on the base film, from a vertical direction side a transfer mechanism which transfers the predetermined layer onto a plate mounted on a movable mounting table, by pressing and heating the transfer film transported by the film transport mechanism; a film take-up mechanism which takes up the transfer film while peeling off the base film from the transfer film whose predetermined layer has been transferred by the transfer mechanism; a moving mechanism which is formed on the same enclosure as the transfer mechanism and moves the mounting table; a pressing mechanism which is formed likewise on the enclosure and presses the plate on the mounting table moved by the moving mechanism; and a control portion which controls operations of the transfer mechanism, the moving mechanism, and the pressing mechanism, to transfer the predetermined layer onto the plate and press the plate, in response to an operation instruction from an external source.

According to the forming apparatus according to the present invention, by providing a transfer mechanism, a moving mechanism, and a pressing mechanism all together in a single enclosure, an operation of placing a plate to another place does not need to be performed, and just by a single operator providing an instruction from an operation panel, a transfer operation and a pressing operation can be continuously performed. In addition, in the forming apparatus according to the present invention, by applying an adhesive from a downward direction (vertical direction side) of a transfer film, dripping of the adhesive or burning of the adhesive on a transfer roller can be avoided.

Brief Description of Drawings

FIG. 1 is a schematic diagram showing an exemplary forming apparatus according to the present invention.
FIG. 2 is a schematic diagram showing a transfer mechanism of the forming apparatus according to the present invention.
FIG. 3 is a schematic diagram showing an operation of a transfer roller of the forming apparatus according to the present invention.
FIG. 4 is a cross-sectional view showing an exemplary faceplate formed by the forming apparatus according to the present invention.
FIG. 5 is a cross-sectional view showing another exemplary faceplate formed by the forming apparatus according to the present invention.
FIG. 6 is a cross-sectional view of an FED having a metal-backed phosphor surface formed by the forming apparatus according to the present invention.
FIG. 7 is a block diagram showing an exemplary electrical configuration of the forming apparatus according to the present invention.
FIG. 8 is a flowchart showing an exemplary forming operation of the forming apparatus according to the present invention.

Best Mode for Carrying Out the Invention

Embodiments of the present invention will be described in detail below with reference to the drawings.

<Forming apparatus according to the present invention>

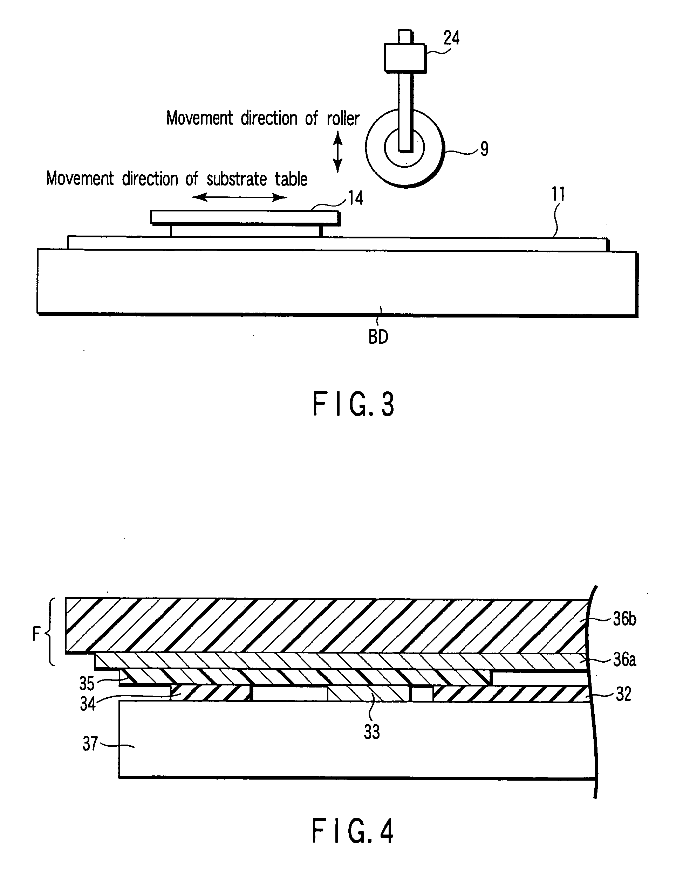

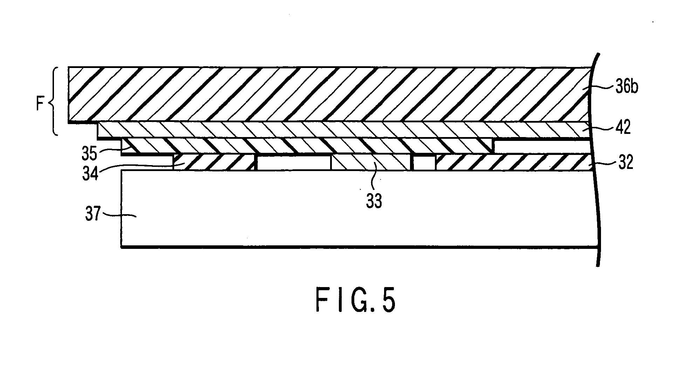

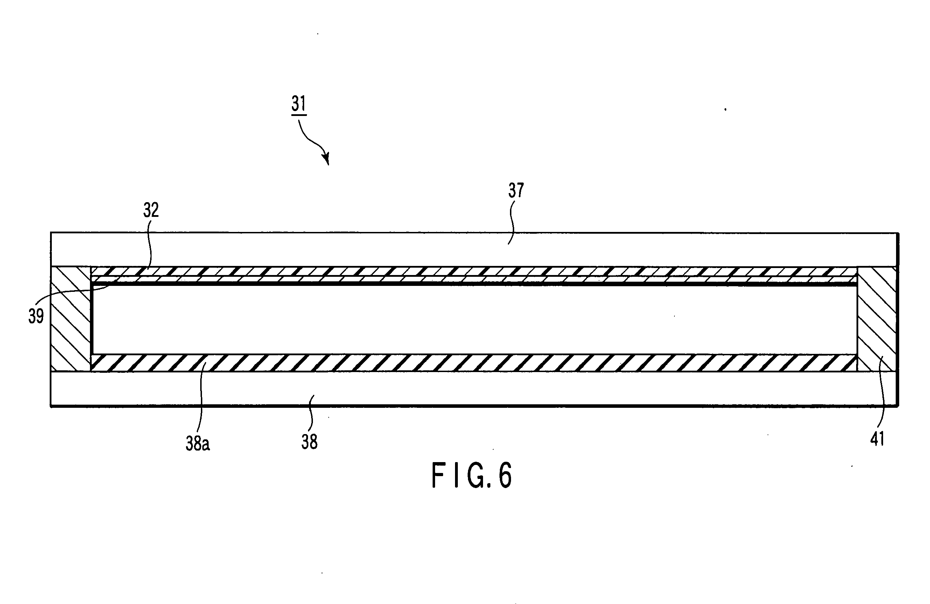

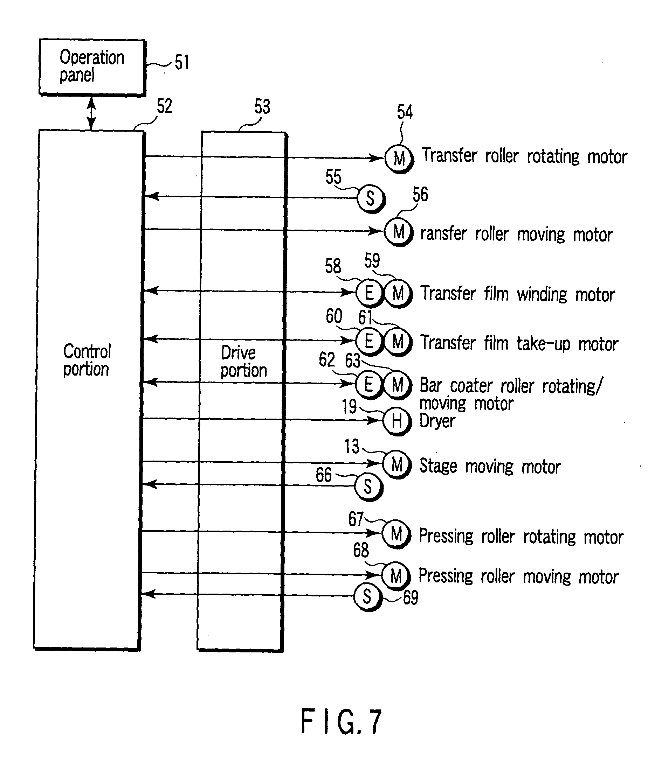

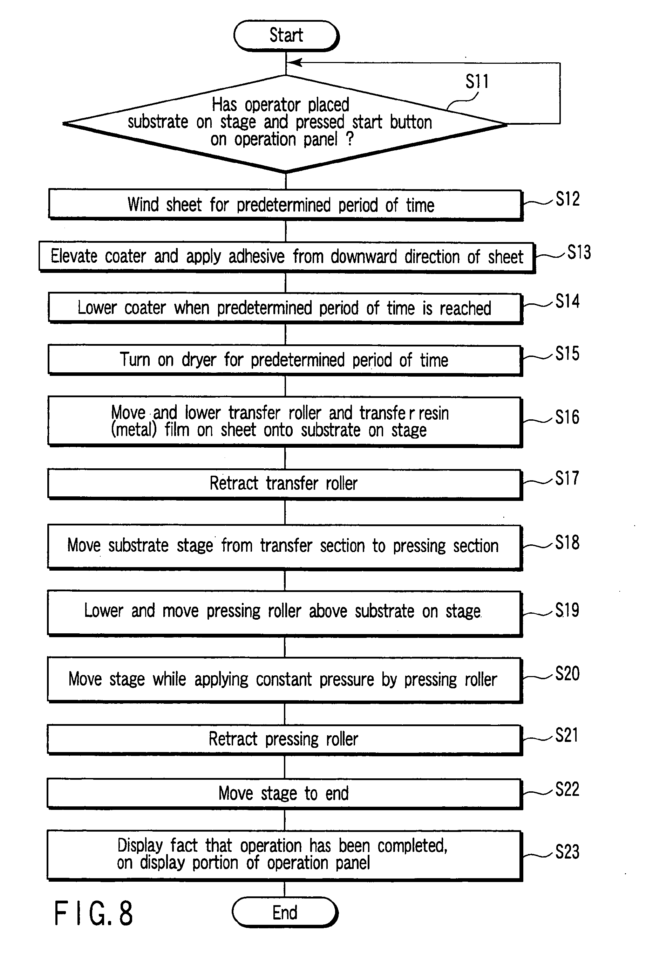

FIG. 1 is a schematic diagram showing an exemplary forming apparatus according to the present invention, FIG. 2 is a schematic diagram showing a transfer mechanism of the forming apparatus according to the present invention, FIG. 3 is a schematic diagram showing an operation of a pressing roller in a pressing configuration of the forming apparatus according to the present invention, FIG. 4 is a cross-sectional view showing an exemplary faceplate formed by the forming apparatus according to the present invention, FIG. 5 is a cross-sectional view showing another exemplary faceplate formed by the forming apparatus according to the present invention, FIG. 6 is a cross-sectional view of an FED having a metal-backed phosphor surface formed by the forming apparatus according to the present invention, FIG. 7 is a block diagram showing an exemplary electrical configuration of the forming apparatus according to the present invention, and FIG. 8 is a flowchart showing an exemplary forming operation of the forming apparatus according to the present invention.

As shown in FIGS. 1 to 3, in the forming apparatus according to the present invention, each portion is provided on a single enclosure BD and the forming apparatus is broadly divided into a transfer mechanism, a moving mechanism, a pressing mechanism, and a control portion. The forming apparatus according to the present invention has, as the transfer mechanism, along a transport path of a transfer film F, a transfer film winding roller 22, guide rollers 1, 4, and 23 for the transfer film F, a transfer film wrinkle removing roller 5, film tension adjustment rollers 7, back-tension rollers 16 that provide tension to the transfer film F, and a transfer film take-up roller 8. In addition, as the transfer mechanism, the forming apparatus according to the present invention further has, as an adhesive applying mechanism, a coater 3, a bar coater roller 2, and adhesive drying apparatuses 19. Furthermore, the forming apparatus according to the present invention has, as the transfer mechanism, static electricity removing apparatuses 20 and 21 and removes static electricity from the transfer film F, and further has, as the transfer mechanism, at least a rubber transfer roller 6, a pressurizing mechanism 17 for pressurizing the transfer roller 6, and a guide rail 18 for moving the transfer roller 6.

Here, the film winding roller 22 is a roller that pulls out the transfer film F from its one end side from a winding body, in which the transfer film F having a metal film 36a formed on a base film 36b with a release layer provided therebetween is wound in a roll shape. The transfer film wrinkle removing roller 5 is a roller, e.g., an expander roll, that pulls the transfer film being transported, in its width direction, thereby removing wrinkles.

The coater 3 and the bar coater roller 2 are apparatuses for applying an adhesive to a predetermined layer such as the metal film of the transfer film F. The coater 3 and the bar coater roller 2 have mechanisms to operate in synchronization with each other. The adhesive drying apparatuses 19 blow air of room temperature (20°C) on the transfer film F having the adhesive applied thereto, and at the same time, blow hot air to dry the adhesive. The guide roller 1 reverses (turns back) a transport direction of the transfer film F. Various rollers including the guide roller 1 transport the pulled out transfer film F to a downstream side. The static electricity removing apparatuses 20 and 21 remove static electricity that may be generated in the transfer film F being transported, in a non-contact manner.

The forming apparatus according to the present invention has, as the moving mechanism, a substrate stage (mounting table) 14, guide rails 10 and 12 for moving the substrate stage (mounting table) 14, a linear motion mechanism (ball screw) 11 that moves the substrate stage (mounting table) 14, and a substrate stage moving motor 13. The forming apparatus according to the present invention further has, as the pressing mechanism, at least a pressing roller 9 and a pressurizing mechanism 24 for the pressing roller 9.

Here, the substrate stage (mounting table) 14 is provided in a position facing the transfer roller 6 with the transfer film F present therebetween, and a faceplate 37 having a phosphor screen 32 formed thereon is mounted on the substrate stage (mounting table) 14. Furthermore, the substrate stage (mounting table) 14 functions as a support table at the time when the transfer film F is pressed by the transfer roller 6, and can move in a vertical direction with respect to a forward transport direction of the transfer film F. The guide rollers 1, 4, and 23 press the transfer film F being transported, on a transport guide side (not shown) and thereby regulate a transport position of the transfer film F in the thickness direction. The film tension adjustment rollers 7 impart a predetermined tension to the transfer film F being transported. The transfer film take-up roller 8 sequentially takes up, while peeling off the base film 36b from the transfer film F having been subjected to transfer processing, the transfer film F from its tip side in the transport direction.

At this time, it is preferred in view of the characteristics of the transfer film F that the base film peeling rate of the transfer film be adjustable up to a maximum of 10m per minute in units of 0.1m per minute. That is, the transfer roller 6, the transfer film wrinkle removing roller 5, and the guide roller 23 of FIG. 2 are fixed in the same frame and when the transfer roller 6 moves, the transfer film wrinkle removing roller 5 and the guide roller 23 move in synchronization with the transfer roller 6.

Accordingly, after the transfer roller 6 pressurizes the transfer film F on the frame 37, whereby the metal film 36a is transferred, the transfer roller 6 moves upward and when the transfer roller 6 returns to its origin position, the base film 36b of the transfer film F is peeled off with the transfer film wrinkle removing roller 5 acting as a fulcrum. The rate at which the transfer roller 6 returns to the origin position is the base film peeling rate and it is preferred that the value be settable from 0.1m to 10m per minute in units of 0.1m.

The forming apparatus according to the present invention has a control portion 52 having an operation panel 51, which receives a control signal from the operation panel 51 or a signal from a sensor or the like and supplies the control signal to each motor or the like, in order to control the operations of the transfer mechanism, the moving mechanism, and the pressing mechanism.

Furthermore, as shown in FIG. 7, the forming apparatus according to the present invention has, as an exemplary electrical configuration, the control portion 52 that receives an operation signal from the operation panel 51 and each drive portion 53 to which a control signal is supplied from the control portion 52. Furthermore, the forming apparatus has, as the transfer mechanism, a transfer roller rotating motor 54 to which a drive signal is supplied from each drive portion 53, thereby rotating the transfer roller 6; a transfer roller moving motor 56 that comes with a position sensor 55 for moving the transfer roller 6; a transfer film winding motor 59 that comes with an encoder 58 for rotating the transfer film winding roller 22; a transfer film winding motor 61 that comes with an encoder 60 for rotating the transfer film take-up roller 8; a bar coater roller rotating/moving motor 63 that comes with an encoder 60 for rotating the bar coater roller 2; and a dryer 19 which is an adhesive drying apparatus.

Furthermore, the forming apparatus according to the present invention has, as the moving mechanism, a stage moving motor 13 that comes with a position sensor 66. Furthermore, the forming apparatus according to the present invention has, as the pressing mechanism, a pressing roller rotating motor 67 that rotates the pressing roller 9 and a pressing roller moving motor 68 that comes with a position sensor 69 for moving the pressing roller 9.

<Transfer film F and plate to be handled by the forming apparatus according to the preset invention>

Next, an exemplary transfer film F and plate 37 to be handled by the forming apparatus according to the present invention will be described below. In the exemplary transfer film F and plate 37 to be handled by the forming apparatus according to the present invention, as shown in FIG. 4, the plate 37 comes with a phosphor screen 32, a peripheral black matrix 33, and an outer frame portion 34, and further thereon masking tape 35.

The transfer film F to be transferred onto the plate 37 has at least a base film 36b and a metal film 36a to be transferred. Here, a release agent layer and a film adhesive layer for the transfer film F are not shown.

Now, a schematic configuration of an FED 31 formed in the present embodiment will be described using FIG. 6. The FED 31 has a metal-backed phosphor surface. To form the metal-backed phosphor surface, first, an optical absorption layer (shielding layer) in a stripe shape, for example, which is composed of a black pigment is formed on an inner surface of a faceplate 37 by a photolithographic process. Then, a slurry including phosphors of various colors, such as a ZnS system, a Y2O3 system, and a Y2O2S system, is applied and dried and patterning is performed using a photolithographic process. In this manner, phosphor layers of three colors, red (R), green (G), and blue (B), are formed between patterns of the optical absorption layer, whereby a phosphor screen 32 is formed. Note that the phosphor layers of various colors can also be formed by a spraying process or a printing process. On the inner surface of the faceplate 37, a peripheral black matrix 33 composed of a black pigment and an outer frame portion 34 composed of a silver paste film are formed in a non-display region around such a phosphor screen 32.

Subsequently, the masking tape 35 is attached onto the non-display region where the peripheral black matrix 33 and the outer frame portion 34 are formed, so as to cover an outer edge portion of the phosphor screen 32. Then, on the phosphor screen 32 thus masked, a transfer film F in which a release agent layer, a metal film 36a such as Al, and a film adhesive layer are stacked in this order on a base film 36b composed of a polyester resin or the like, is disposed and the metal film 36a is transferred.

Examples of a release agent for the transfer film include a cellulose acetate, a wax, a fatty acid, a fatty acid amide, a fatty acid ester, a rosin, an acrylic resin, a silicone, a fluorocarbon resin, and the like. Among them, one is appropriately selected according to the peeling property between the base film and a protective film which will be described later, or the like, and used. For a film adhesive, a vinyl acetate resin, an ethylene-vinyl acetate copolymer, a styrene-acrylate resin, an ethylene-vinyl acetate-acrylic acid ternary copolymer resin, or the like is used. Furthermore, a protective film that uses a thermosetting resin, a thermoplastic resin, a photocuring resin, or the like, as a base and contains a softening agent, can also be provided between the release agent layer and the metal film.

<Processing operation of the forming apparatus according to the present invention>

Next, operation steps of processing in which, by the forming apparatus according to the present invention, the transfer film F is disposed over the phosphor screen 32 so as to extend over the masking tape 35 in the non-display region, the metal film 36a is transferred to form a metal-backed layer, the substrate stage (mounting table) 14 is moved, and thereafter, a pressing step is performed, will be described using a flowchart.

When the operator places the faceplate 37, which is a substrate, on the substrate stage (mounting table) 14 and presses a start button on the operation panel, the control portion 52 recognizes this according to a process control program or the like stored in advance in a memory region or the like contained in the control portion 52 and identifies signals from each encoder portion and sensor portion, thereby supplying an appropriate control signal according to the signals to the drive portion 53 and the like (S11).

Then, the transfer film F having a metal film 36a formed on a base film 36b with a release agent layer provided therebetween is being wound around the transfer film winding roller 22 in a roll shape and a sheet is wound for a predetermined period of time (S12). Air having a static eliminating effect is blown on the transfer film F pulled out from the transfer film winding roller 22 from the non-contact style static electricity removing apparatuses 20 and 21, whereby static electricity charged on the transfer film F is removed or reduced. Here, an adverse effect caused when static electricity is charged on the transfer film F is that surrounding floating matter (such as dust) is sucked to the transfer film F and upon a subsequent adhesive application, the attached matter induces unevenness of adhesive application, which causes a defect in an adhesive layer and a normal adhesive layer cannot be obtained. Such an adverse effect is suppressed by the static electricity removing apparatuses 20 and 21.

The transfer film F from which the charged static electricity has been removed slides with the film wrinkle removing roller 5, whereby wrinkles on a surface of the film are removed. The coater 3 is elevated to a side where the metal film 36a of the transfer film F having passed through the guide roller 1 is formed and an adhesive is applied from a downward direction (vertical direction side) of the sheet (S13).

That is, if an adhesive is applied from the upper side of the transfer film F, a phenomenon occurs in which an adhesive liquid moves to an end of the sheet, drips downward from an end portion, and the adhesive goes around the opposite side. This causes a phenomenon in which an adhesive residue remains attached to the transfer roller and the guide roller and is burned, the roller surface flatness of that portion is lost, the residue breaks through the base film upon transfer, and the metal film to be transferred is also broken. Hence, here, by applying an adhesive from the lower side, such inconvenience can be avoided.

For an application method by the coater 3, in addition to an application method by way of the bar coater roller 2 of the present embodiment, an application method using a gravure roll, or the like can also be adopted. After an adhesive application in a predetermined length is performed on the metal film 36a of the transfer film F, the bar coater roller 2 and the coater 3 are moved away from the transfer film F and lowered to an initial position on the lower side (S14). The adhesive thus formed on the metal film 36a of the transfer film F by the coater 3 is dried by the adhesive drying apparatuses 19 (S15). At this time, from the drying devices 19, first, room temperature (18°C to 25°C) is blown and when a predetermined period of time is reached, hot air is blown. It is desirable to set the air velocity for blowing air to a low value and set the air velocity for drying to a moderately high value.

By blowing air having a static eliminating effect, on the base film side which is the opposite side of the adhesive applied surface of the transfer film F from the adhesive drying apparatuses 19, surrounding floating matter (such as dust) is prevented from being sucked to the adhesive applied surface of the transfer film F during an adhesive drying process and occurrence of unevenness of adhesive application due to the attached matter can be suppressed.

Note that a series of operations from pulling out the transfer film F to applying and drying an adhesive are performed in tandem and the transport rate of the transport film F can be set in units of 0.1m per minute, and can be adjusted within a range from 0.1m to 10m per minute. The adhesive application time can be set in units of 1 second. The length of application of an adhesive to the transfer film F can be adjusted by setting the adhesive application time to an arbitrary value from a relational expression between the transport rate of the transfer film F and the adhesive application time

$$(\text{adhesive application length} = [\text{film transport rate}] \times [\text{adhesive application time}]).$$

The faceplate 37 mounted on the substrate stage (mounting table) 14 has a phosphor screen 32 in which an optical absorption layer (shielding layer) and phosphor layers of red, blue, and green are arranged in a stripe shape, and is mounted with the side of the phosphor screen 32 face up. On the inner surface of the faceplate 37, a peripheral black matrix 33 composed of a black pigment and an outer frame portion 34 composed of a silver paste film are formed in a non-display region around such a phosphor screen 32. The masking tape 35 is attached onto the non-display region where the peripheral black matrix 33 and the outer frame portion 34 are formed, so as to cover an outer edge portion of the phosphor screen 32. The substrate stage (mounting table) 14 is structured such that it is equipped with a misregistration prevention mechanism for the faceplate 37 and the position of the faceplate 37 can be changed according to its size.

Then, according to control of the drive portion 53 of the control portion 52 and by rotation of the stage moving motor 13 and the like, the transfer film F having the adhesive layer formed on the surface of the metal film 36a is transported to a predetermined position on the substrate stage (mounting table) 14. At this time, the orientation of the transfer film F is horizontal to a floor by the film guide rollers 1, 4, and 23. Subsequently, the transfer roller 6 is moved and lowered and the metal film on the sheet is transferred onto the side of the phosphor screen 32 of the faceplate 37 on the,substrate stage (mounting table) 14 (S16). At this time, according to control of the drive portion 53 of the control portion 52 and by operations of the transfer roller rotating motor 54 and the transfer roller moving motor 56, the transfer roller 6 is moved to a predetermined position and rotated at a predetermined speed, whereby transfer processing is performed. When the transfer processing is completed, the transfer roller 6 is retracted upward (S17). After this, the base film 36b of the transfer film F is peeled away.

Here, as the transfer roller 6, a rubber roller in which a coating layer of a natural rubber or a silicone rubber is formed on an outer surface of a core material made of a metal such as an iron, or the like is applied. It is desirable that the hardness of the rubber coating layer be 70 to 100 degrees and the thickness be 5 to 30 mm. Furthermore, the transfer roller 6 is moved on the surface of the base film 36b of the transfer film F at a speed of 1.0m to 8.0m per minute while the transfer roller 6 is heated such that the temperature of a rubber layer surface which is a pressing portion is from 150°C to 240°C, and pressed against the film, whereby the metal film 36a is bonded. It is preferable that the pressing force be in a range from 300 kgf/cm$^2$ to 1500 kgf/cm$^2$ (e.g., 500 kgf/cm$^2$).

The aforementioned ranges for the surface temperature, pressing force, and pressing speed of the transfer roller 6 are necessary and sufficient conditions for the transfer film F to be pressed while being sufficiently heated, by the transfer roller 6 coming into contact with the transfer film F. Thus, if they are outside of these ranges, the adhesion property between the phosphor screen 32 and the metal film 36a which are shown in FIG. 2 becomes insufficient, which may cause a defect in transfer of the metal film 36a or may cause cracking after baking. That is, if the surface temperature of the transfer roller 6 is too high, the rubber is damaged by heat and the transfer roller 6 does not carry out a pressing function. Further, if the pressing speed is too low, the base film 36b is heated too much and thus is softened or melted and cut upon peeling away, and therefore, such conditions are not desirable. If the surface temperature of the transfer roller 6 is too low or the pressing speed is too high, heating of the film adhesive becomes insufficient and thus bonding of the metal film 36a becomes insufficient, thereby generating a transfer defect partially or reducing yield. Therefore, such conditions are not desirable.

Furthermore, the transfer roller 6 has the pressurizing mechanism 17 by which a roller main body moves up and down, and the pressing value can be adjusted within a range from 0 to 1500 kgf/cm$^2$. In addition, the transfer roller 6 has, as described above, a sliding mechanism that moves in a back-and-forth direction in the transport direction of the transfer film F. The moving speed of the transfer roller 6, i.e., the transfer rate, is in a range from 0.1m to 10.0m per minute and the setting value can be arbitrarily set and changed in units of 0.1m per minute.

If the transfer is forcefully performed in a state in which, for example, there are a lot of wrinkles in the transfer film F, cracking or a wrinkle-like defect occurs in the metal-backed layer and thus a normal metal backing is not provided, significantly impairing a predetermined function. However, in the forming apparatus according to the present invention, upon pressing while heating by the transfer roller 6, it is possible to remove wrinkles in the transfer film F by the action of the film wrinkle removing roller 5, and thus, the quality of a resulting metal-backed layer 39 turns out to be good.

In addition, by blowing air having a static eliminating effect on the transfer film F from the static electricity removing apparatuses 20 and 21, occurrence of static electricity is suppressed. At this time, if the occurrence of static electricity is neglected, surrounding floating matter or the like may be attached to the transferred metal-backed layer. Further, if, in such a state, it proceeds to the next pressing process, a defect such as cracking or a hole occurs in the metal-backed layer, significantly impairing a predetermined function.

After the transfer is completed, the base film 36b of the transfer film F having been subjected to the transfer processing passes through the tension rollers 16 and is taken up by the transfer film take-up roller 8. The transfer film take-up roller 8 is connected to the transfer film take-up motor 61 and the encoder 60, and is driven by the control portion 52 and the drive portion 53. In addition, the transfer film take-up roller 8 has a back-tension function of maintaining tension during standby so that the film is not transported.

In the present embodiment, after the transfer film F is thus disposed on the phosphor screen 32, the transfer film F is pressed while heated by the transfer roller 6, whereby the film adhesive layer is bonded to a top surface of the phosphor screen 32. Then, after the metal film 36a such as Al is transferred onto the phosphor screen 32 of the faceplate 37 and over the masking tape 35, the masking tape 35 together with a portion of the metal film 36a formed on a top surface of the masking tape 35 are peeled away, whereby the metal film 36a remains only in a non-forming region of the masking tape 35.

In this manner, an application of an adhesive and a drying operation of the adhesive can be efficiently performed and occurrence of wrinkles that may occur in a transfer film is suppressed. Furthermore, by reducing attachment of foreign matter onto the transfer film due to static electricity, an improvement in productivity in the process of forming a metal-backed layer can be achieved.

Thereafter, according to operations of the control portion 52 and the drive portion 53 and by rotation of the stage moving motor 13, the substrate stage (mounting table) 14 is moved from a transfer section to the pressing roller 9 which is a pressing section, along the guide rails 10 and 12 and stops immediately below the pressing roller 9 by sensing the position sensor 66 (S18). Thereafter, the pressing roller 9 is moved downward according to the operation of the pressurizing mechanism 24 (S19) and presses the transferred metal film 36a at a constant pressure while heating the transferred metal film 36a, and the substrate stage (mounting table) 14 is moved (S20). After that, when it reaches an end point, the pressing roller 9 is retracted upward (S21). Then, the substrate stage (mounting table) 14 is moved to an end (S22). When the position sensor 66 detects movement, by the operation of the control portion 52, the fact that the transfer process and the pressing process have been completed is displayed on a display portion of the operation panel 51, whereby the operator recognizes the completion of all processes (S23).

In this manner, the transfer mechanism, the moving mechanism, and the pressing mechanism are formed on a single enclosure BD and controlled by a process control program of a single control portion 52. Thereby, as long as no error occurs on the way, just by the operator first operating the start button on the operation panel 51, the operator, thereafter, does not particularly need to perform any instruction operation and a transfer process and a pressing process can be automatically performed. This is clear from the flowchart of FIG. 8 and from the fact that a transfer process and a pressing process are performed without the need for any instruction from the operator.

That is, in the forming apparatus according to the present invention, by forming the transfer mechanism and the pressing mechanism on the same enclosure BD and controlling their operations by the single control portion 52, an operation of transferring the plate 37 from the substrate stage 14 to another place does not arise. Thus, an event encountered in the conventional case does not occur that when a substrate having been subjected to transfer is taken out from a stage and is placed on a substrate stage of a pressing apparatus, depending on how the substrate is handled, scratches or cracks occur in the substrate, a substrate edge chipping defect occurs, or inconvenience occurs that the substrate loses its function as a faceplate product and becomes unusable. In addition, an event encountered in the conventional apparatus does not occur that by using two substrate stages, an initial operation of adjusting a pressure distribution at the stages, or the like becomes a great burden for the operator. By this, just by once setting the plate 37 on the substrate stage 14 and pressing the start button on the operation panel 51, it becomes possible to automatically perform a transfer process and a pressing process.

(In the case of forming a resin layer)

In the aforementioned transfer processing, the embodiment is described in which the metal film 36a which serves as a metal-backed layer is formed by the forming apparatus according to the present invention. However, since formation of a phosphor surface cannot always obtain a flat surface, inconvenience may occur that the metal film 36a is not formed properly. As measures against this, it is preferred that, as shown in FIG. 5, a resin layer 42 with high transmittance such as nitrocellulose, for example, be transferred instead of a metal film 36a by using the forming apparatus according to the present invention and a transfer film F. Transfer processing for this case is different from the case of the aforementioned metal film transfer processing only in that the layers are switched, and a process to be performed is the same.

In the case where the resin layer 42 with high transmittance, such as nitrocellulose, is transferred instead of the metal film 36a, after the resin layer 42 is transferred, a metal film is deposited thereon by another producing apparatus. At that time, however, the resin layer 42 is evaporated and thus even if a phosphor surface does not have a perfect flat surface, it is possible to form an ideal metal-backed layer.

(Exemplary specific forming process)

Next, an embodiment of a forming process using the forming apparatus according to the present invention will be described in further detail. It is to be understood that the present invention is not limited to the following embodiment.

First, after a stripe-shaped optical absorption layer (shielding layer) composed of a black pigment is formed on an inner surface of a faceplate 37 by a photolithographic process, a slurry including phosphors of various colors, such as a ZnS system, a Y203 system, and a Y202S system, is applied and dried, and patterning is performed using a photolithographic process. Then, phosphor layers of three colors, red (R), green (G), and blue (B), are formed in a stripe shape between shielding portions so as to be adjacent to one another, whereby a phosphor screen 32 is produced. In addition, on the inner surface of the faceplate 37, a peripheral black matrix 33 composed of a black pigment and an outer frame portion 34 composed of a silver paste film are sequentially formed in a non-display region around such a phosphor screen.

Then, a transfer film F shown in FIG. 4, i.e., a roll-shaped transfer film F, in which a release agent layer having a thickness of 0.5 $\mu$m is formed on a base film 36b having a film thickness of 20 $\mu$m and composed of a polyester and an Al is deposited thereon to form a metal film (A1 film) 36a having a thickness of 50 nm, is attached to the transfer film winding roller 22 on the most upstream side of the forming apparatus 1 for a metal-backed layer, shown in FIG. 2. Then, the transfer film F is passed all the way, through the guide rollers 1, 4, and 23, to the transfer film take-up roller 8 on the most downstream side. A drive motor portion of the transfer film winding roller 22 has a back-tension mechanism for rolling back the transfer film in an opposite direction to a winding direction of the transfer film, and the torque ratio of the transfer film winding roller 22 to the transfer film take-up roller 8 is adjusted to apply tension.

Subsequently, a resin composition composed of 90 parts of toluene and 10 parts of vinyl acetate is applied onto the metal film (Al film) 36a of the transfer film F through the bar coater roller 2 of the coater 3. After this, first, air of room temperature (20°C) is blown on an applied adhesive from the drying apparatuses 19 for five seconds and then hot air (temperature of 80°C) is blown from the drying apparatuses 19, whereby an adhesive film is formed.

Then, the transfer film F is transported to the mounting table 14 and disposed so as to contact with the phosphor screen (phosphor layer) 32 on the inner surface of the faceplate 37 mounted on the mounting table 14. Thereafter, by the rubber transfer roller 6 whose rubber hardness is 80 degrees and whose surface temperature is heated to 200°C, it is pressed and attached at a rate of 4.0m per minute and a pressure of 500 kgf/cm$^2$, and then, the base film 36b is peeled off. In this manner, a metal-backed layer (A1 film layer) 39 is formed on the phosphor screen 32 of the faceplate 37.

Next, by the rubber pressing roller 9 whose rubber hardness is 80 degrees and whose surface temperature is heated to 175°C, it is pressed at a rate of 1.0m per minute and a pressure of 900 kgf/cm$^2$, whereby the metal-backed layer (Al film layer) 39 transferred onto the phosphor layer 22 on the inner surface of the faceplate 37 is brought into intimate contact. Furthermore, the faceplate 37 having the metal-backed layer (Al film layer) 39 thus formed thereon by transfer is heated (baked) at 450°C to decompose and remove organic matter, whereby a metal-backed phosphor surface is formed. Thereafter, by using the faceplate 37 having the thus formed metal-backed phosphor surface, an FED 31 is fabricated by an ordinary method.

Namely, an electron generating source having a multitude of surface conduction type electron emitting elements formed in a matrix form on a substrate is fixed to a glass substrate, whereby a rear plate 38 is fabricated. Then, the rear plate 38 and the faceplate 37 are disposed so as to face each other with a support frame 36 and a spacer provided therebetween, and attached by sealing with a frit glass. Thereafter, necessary processing, such as sealing and evacuation, is performed and a 10-inch color FED is fabricated. A 1000-hour driving test was conducted on the thus fabricated FED 31 at an electron beam acceleration voltage of 5 kV, and as a result, a discharge phenomenon did not occur.

Next, an FED 31 that uses the thus formed metal-backed phosphor surface as an anode electrode will be described based on FIG. 6.

The FED 31 is configured such that the faceplate 37 having the metal-backed phosphor surface formed in the aforementioned embodiment and the rear plate 38 having electron emitting elements 38a arranged in a matrix form are disposed so as to face each other with a small gap of the order of several mm provided therebetween, and a high voltage of 5 to 15 kV is applied between the faceplate 37 and the rear plate 38. On the faceplate 37, a phosphor screen 32 having stripe-shaped optical absorption layer and phosphor layers is provided and further thereon the metal-backed layer 39 formed by the aforementioned forming apparatus according to the present invention is provided. In addition, support frames (sidewalls) 41 are formed on the right and left sides of the FED 31.

Here, the gap between the faceplate 37 and the rear plate 38 is extremely small and thus discharge (dielectric breakdown) is likely to occur therebetween. However, the FED 31 has the metal-backed layer 39 which is smooth and even and has no depressions or projections, cracking, wrinkles, or the like, and thus the adhesion property between the metal-backed layer 39 and the phosphor screen 32 which is a lower layer is high. Furthermore, display with high brightness, high color purity, and excellent reliability can be implemented.

By the aforementioned various embodiments, a person skilled in the art can implement the present invention. Furthermore, various variants of these embodiments can be easily created by a person skilled in the art and even without inventive ability, the invention can be applied to various embodiments. Thus, it is to be understood that the present invention covers a wide range which is not contradictory to the disclosed principle and novel features, and is not limited to the above-described embodiments.

For example, it is also possible to configure such that an adhesive layer is formed in advance on a metal film 36a, a transfer film F having the adhesive layer thus formed is wound by a method in which release paper is interposed between winding layers, or the like, and the metal film 36a is transferred onto a phosphor screen while the transfer film F is pulled out by a pull-out roller 2.

**Claims**

**1.** A forming apparatus **characterized by** comprising:

a film pull-out mechanism which pulls out, from a winding body of a transfer film in which at least a predetermined layer is formed on a base film, the transfer film from its one end side;
a film transport mechanism which transports the transfer film pulled out from its one end side by the film pull-out mechanism, to a downstream side;
a transfer mechanism which transfers the predetermined layer onto a plate mounted on a movable mounting table, by pressing and heating the transfer film transported by the film transport mechanism;
a film take-up mechanism which takes up the transfer film while peeling off the base film from the transfer film whose predetermined layer has been transferred by the transfer mechanism;
a moving mechanism which is formed on the same enclosure as the transfer mechanism and moves the mounting table;
a pressing mechanism which is formed likewise on the enclosure and presses the plate on the mounting table moved by the moving mechanism; and
a control portion which controls an operation of each mechanism to transfer the predetermined layer onto the plate and press the plate, in response to an operation instruction from an external source.

**2.** The forming apparatus according to claim 1, **characterized in that** once the control portion has received an operation instruction, the control portion automatically performs a transfer process, a moving process, and a pressing process without need for any further instruction.

**3.** A forming apparatus **characterized by** comprising:

a transfer mechanism which presses and transfers a predetermined layer formed on a base film, onto a plate mounted on a movable mounting table;
a moving mechanism which is formed on the same enclosure as the transfer mechanism and moves the mounting table;
a pressing mechanism which is formed likewise on the enclosure and presses the plate on the mounting table moved by the moving mechanism; and

a control portion which controls operations of the transfer mechanism, the moving mechanism, and the pressing mechanism, to transfer the predetermined layer onto the plate and press the plate, in response to an operation instruction from an external source.

4. The forming apparatus according to claim 3, **characterized in that** the transfer mechanism includes an applying mechanism which applies an adhesive to a surface of the predetermined layer formed on the base film, from a vertical direction side.

5. The forming apparatus according to claim 3, **characterized in that** the transfer mechanism includes:

a film pull-out mechanism which pulls out, from a winding body of a transfer film in which at least the predetermined layer is formed on the base film, the transfer film from its one end side;
a film transport mechanism which transports the transfer film pulled out from its one end side by the film pull-out mechanism, to a downstream side;
a transfer mechanism which transfers the predetermined layer onto the plate with an adhesive layer provided therebetween, by pressing the transfer film transported by the film transport mechanism against a phosphor surface on the plate and heating the transfer film; and
a film take-up mechanism which takes up the transfer film while peeling off the base film from the transfer film whose predetermined layer has been transferred by the transfer mechanism.

6. The forming apparatus according to claim 3, wherein the transfer mechanism has at least: a rotating motor of a transfer roller to press and transfer the predetermined layer onto the plate; and a transfer roller moving motor to guide the transfer roller to the plate.

7. The forming apparatus according to claim 5, **characterized by** further comprising a wrinkle removing mechanism provided in a downstream side position in a vicinity of the film pull-out mechanism and in a vicinity of a position where the transfer mechanism is provided, the wrinkle removing mechanism removing wrinkles that may occur in the transfer film.

8. The forming apparatus according to claim 5, **characterized by** further comprising a static electricity removing mechanism provided in a downstream side position in a vicinity of the film pull-out mechanism, on a base film surface side which is an opposite side of an adhesive applied surface of the transfer film on a downstream side of the adhesive applying mechanism, and in a vicinity of a position where the transfer mechanism is provided, the static electricity removing mechanism removing static electricity charged on the transfer film.

9. The forming apparatus according to claim 5, **characterized in that** a transport rate of the transport film by the film transport mechanism can be adjusted within a range from 0.1m to 10m per minute and an adhesive application time can be set in units of 1 second.

10. The forming apparatus according to claim 5, **characterized in that** in the transfer mechanism, a pressing force against the transfer film is set in a range from 300 kg/cm$^2$ to 1500 kg/cm$^2$ and a heating temperature is set in a range from 150°C to 240°C.

11. The forming apparatus according to claim 5, **characterized in that** the mounting table and the transfer roller are provided in a position facing the transfer mechanism with the transfer film present therebetween, the transfer film being transported by the film transport mechanism, and the transfer roller moves parallel to a transport direction of the transfer film at a moving speed ranging from 0.5m to 10m per minute.

12. A forming method comprising:

pressing and transferring a predetermined layer formed on a base film, onto a plate mounted on a movable mounting table;
moving the mounting table by using a mechanism formed on the same enclosure as a mechanism for the transfer; and
pressing the plate on the moved mounting table by using a mechanism formed on the enclosure.

FIG. 1

Vertical movement
direction of transfer
roller

Movement direction
of transfer roller

FIG. 2

Movement direction of roller

Movement direction of substrate table

24

9

14

11

BD

# FIG. 3

F

36b

36a

35

34

32

33

37

# FIG. 4

F { 36b
  42
35
34
33
32
37

# FIG. 5

F I G. 6

FIG.7

$$\boxed{\text{Start}}$$

S11

Has operator placed
substrate on stage and pressed start button
on operation panel ?

| Wind sheet for predetermined period of time | S12 |

| Elevate coater and apply adhesive from downward direction of sheet | S13 |

| Lower coater when predetermined period of time is reached | S14 |

| Turn on dryer for predetermined period of time | S15 |

| Move and lower transfer roller and transfer resin (metal) film on sheet onto substrate on stage | S16 |

| Retract transfer roller | S17 |

| Move substrate stage from transfer section to pressing section | S18 |

| Lower and move pressing roller above substrate on stage | S19 |

| Move stage while applying constant pressure by pressing roller | S20 |

| Retract pressing roller | S21 |

| Move stage to end | S22 |

| Display fact that operation has been completed, on display portion of operation panel | S23 |

# F I G. 8

$$\boxed{\text{End}}$$

## INTERNATIONAL SEARCH REPORT

| | International application No. |
|---|---|
| | PCT/JP2005/011967 |

A. CLASSIFICATION OF SUBJECT MATTER
   Int.Cl$^7$ H01J9/22, 9/227

According to International Patent Classification (IPC) or to both national classification and IPC

B. FIELDS SEARCHED

Minimum documentation searched (classification system followed by classification symbols)
   Int.Cl$^7$ H01J9/22, 9/227, B29D9/00

Documentation searched other than minimum documentation to the extent that such documents are included in the fields searched
   Jitsuyo Shinan Koho        1922-1996   Jitsuyo Shinan Toroku Koho   1996-2005
   Kokai Jitsuyo Shinan Koho  1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2001-180194 A  (Kabushiki  Kaisha  Sanko),<br>03 July, 2001 (03.07.01),<br>Par. Nos. [0012] to [0013], [0024]; Figs. 1, 12<br>(Family: none) | 1-5,12<br>7-10<br>6,11 |
| Y<br>A | JP 2003-031113 A  (Toshiba  Corp.),<br>31 January, 2003 (31.01.03),<br>Par. Nos. [0073] to [0075]<br>(Family: none) | 7-10<br>6,11 |
| Y | JP 9-52347 A  (Matsushita  Electric  Industrial<br>Co., Ltd.),<br>25 February, 1997 (25.02.97),<br>Par. No. [0019]<br>(Family: none) | 7 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>   09 September, 2005 (09.09.05) | Date of mailing of the international search report<br>   27 September, 2005 (27.09.05) |
|---|---|
| Name and mailing address of the ISA/<br>   Japanese Patent Office | Authorized officer |
| Facsimile No. | Telephone No. |

Form PCT/ISA/210 (second sheet) (January 2004)

<table>
<tr><td colspan="2" style="text-align:center">**INTERNATIONAL SEARCH REPORT**</td><td>International application No.<br>PCT/JP2005/011967</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-148424 A (Fuji Photo Film Co., Ltd.),<br>22 May, 2002 (22.05.02),<br>Par. Nos. [0009] to [0011]<br>(Family: none) | 8 |
| A | JP 59-81833 A (Corning Glass Works),<br>11 May, 1984 (11.05.84),<br>Page 4, lower left column, line 16 to lower<br>right column, line 4<br>& US 4557798 A    & EP 104834 A<br>& DE 3372891 A   & CA 1222790 A<br>& KR 9201500 B | 1-12 |
| E,A | JP 2005-203149 A (Toshiba Corp.),<br>28 July, 2005 (28.07.05),<br>Full text; all drawings<br>(Family: none) | 1-12 |

Form PCT/ISA/210 (continuation of second sheet) (January 2004)

**EP 1 770 744 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63102139 A